# EUROPÄISCHE PATENTANMELDUNG

(11) **EP 1 111 264 A1**
(43) Veröffentlichungstag der Anmeldung: **27.06.2001**
(21) Anmeldenummer: 00121811.4
(22) Anmeldetag: 06.10.2000
(51) Int. Cl.: F16D 65/12

(54) **Kombinierte Scheiben- und Trommelbremse**

(30) Priorität: 24.12.1999 DE 19963031
(71) Anmelder: Dr.Ing. h.c.F. Porsche Aktiengesellschaft, 70435 Stuttgart (DE)
(72) Erfinder: Aydt, Günter, 71522 Backnang (DE)

(57) **Zusammenfassung**

Eine kombinierte Scheiben- und Trommelbremse (1) umfaßt zwei Reibringe (2,3) und eine Innenbackenbremse (5), wobei im innenliegenden Reibring (3) ein Ringkanal (11) vorgesehen ist. Dieser Ringkanal (11) dient zum Sammeln und Abführen von in die Bremsscheibe eintretendes Wasser bzw. von Wassertropfen, wobei eine Abführung dieser Flüssigkeit über einen Spaltraum (Z) zwischen dem äußeren Reibring und einem Abschirmblech (16) erfolgt. Des weiteren ist der Luftführungskanal (7) als separater wasserabführender Kanal in der Bremsscheibe (1) ausgebildet.

## Beschreibung

Die Erfindung bezieht sich auf eine kombinierte Scheiben- und Trommelbremse mit einer innenbelüfteten Bremsscheibe nach dem Oberbegriff des Anspruchs 1.

Aus der DE 38 24 917 A1 ist eine Bremstrommel mit einem Bremsring bekannt, an dem eine umlaufende Ausnehmung angeordnet ist, in welche ein Blech hineinragt, damit ein Spritzwassereintritt in die Trommel verhindert und ein Spritzwasseraustritt verbessert wird. Des weiteren ist aus der US 4,313,528 eine innenbelüftete Scheibenbremse mit einer Innenbackenbremse bekannt, die zum Schutz vor Wassereintritt in die Innenbackenbremse am inneren Reibring eine Ringnut aufweist, die in ihrem Grund-Durchtrittsöffnungen zu den Luftführungskanälen zwischen den Reibringen der Bremsscheibe aufweist. Zum Wasserablauf ist ein umlaufender Kragen von einem Abschirmblech abgestellt und zur Ringnut hin abgebogen.

Aufgabe der Erfindung ist es, bei einer innenbelüfteten Bremsscheibe mit einer Innenbackenbremse ein Eindringen von Spritzwasser, Wasser u. dgl. auf die Laufflächen der Innenbackenbremse zu vermeiden und durch eine gezielte Ein- und Ausleitung von Wasser sowohl innerhalb als auch außerhalb der Bremsscheibe mit einfachen Mitteln zu ermöglichen.

Diese Aufgabe wird erfindungsgemäß durch die Merkmale des Anspruchs 1 gelöst. Weitere vorteilhafte Merkmale beinhalten die Unteransprüche.

Im Gegensatz zur getrennten Wasseraufnahme und zur gemeinsamen Wasserabführung von in die Bremsscheibe eindringenden Wassers, Spritzwassers u. dgl. über Luftführungskanäle in einer innenbelüfteten Bremsscheibe als Wasserabführungskanäle erfolgt dagegen erfindungsgemäß die Wasserableitung über zwei voneinander getrennte Kanäle bzw. durch die Luftführungskanäle der innenbelüfteten Bremsscheibe und über ein von einem Abschirmblech zur Bremsscheibe gebildeten Zwischenraum nach außen. Es ergibt sich somit bei großem Spritzwasser- bzw. Flüssigkeitsanfall eine bessere und schnellere Abführung von Wasser nach außen über die zwei getrennten Kanäle bzw. den Zwischenraum, ohne daß die Innenbackenbremse von Spritzwasser beaufschlagt wird.

Die Luftführungskanäle verlaufen zwischen den beiden Reibringen der innenbelüfteten Bremsscheibe in etwa parallel zu den Reibringwandungen, wobei eine obere Mündungsöffnung der Luftführungkanäle bzw. der Wasserabführungskanäle in den Stirnflächen der Reibringe liegt und die untere Mündungsöffnung der Luftführungskanäle im Bereich bzw. zur Bremstrommel unter einem Winkel von 90 Grad zur Trommelwandung angeordnet ist und sich von hier aus bogenförmig zum weiteren gerade ausgeführten Luftführungskanal zwischen den Reibringen erstreckt.

Durch diese getrennt vom Mündungsspalt des Abschirmbleches angeordneten Mündungsöffnungen der Luftführungskanäle kann ein sofortiger Austritt von Spritzwasser bzw. Flüssigkeit unter Umgehung des Ringkanals erfolgen.

Ein Ausführungsbeispiel der Erfindung ist in den Zeichnungen dargestellt und wird im folgenden näher beschrieben.

Es zeigen:
- Fig. 1: einen Querschnitt durch eine obere Hälfte einer Bremsscheibe mit einer oberen Mündungsöffnung eines Luftkanals und einem seitlichen einen Zwischenraum begrenzenden Abschirmblech und in einer Wassereintrittsposition und
- Fig. 2: einen Querschnitt durch eine untere Hälfte einer Bremsscheibe mit einer unteren Mündungsöffnung der Luftkanäle bzw. Wasserabführungskanäle in einer Wasseraustrittsposition.

Eine innenbelüftete Bremsscheibe 1 umfaßt im wesentlichen zwei Reibringe 2, 3 die mit einer Bremstrommel 4 verbunden sind. In dieser ist eine Innenbackenbremse 5 angeordnet. Die beiden Reibringe 2, 3 weisen radiale Querrippen 6 über den Umfang auf, welche zwischen den Reibringen 2, 3 Luftführungskanäle 7 bilden.

Der innenliegende eine Reibring 3 der Bremsscheibe 1 ist mit einem Ringkanal 11 versehen, nach Art einer Nut 8 ausgeführt, die koaxial zur Bremstrommel 4 angeordnet ist. Dieser Kanal 11 weist in einer Seitenwandung eine Rinne 8a als sogenannte Wasserablaufrinne auf. Dieser Ringkanal 11 besitzt einen bogenförmigen Grund 9, der sich von einer Reibringfläche 3a bis zu der Rinne 8a erstreckt, die einen Begrenzungrand 8b zum Zwischen- bzw. Spaltraum Z hin aufweist. Die Rinne 8a ist umlaufend vorgesehen und weist einen Grund querliegend zu den Reibringen 2,3 auf.

Durch den bogenförmigen Grund 9 des Ringkanals 11 kann das Wasser, welches sich in der Rinne 8a angesammelt hat, in der Position II schnell abfließen. Über ein beabstandet zum inneren Reibring 3 angeordnetes Abschirmblech 16 ist die Bremsscheibe 1 geschützt. Am Abschirmblech 16 ist ein Wasserführungsblech 13, ein sogenannter Kragen vorgesehen, der in den Ringkanal 11 hineinragt.

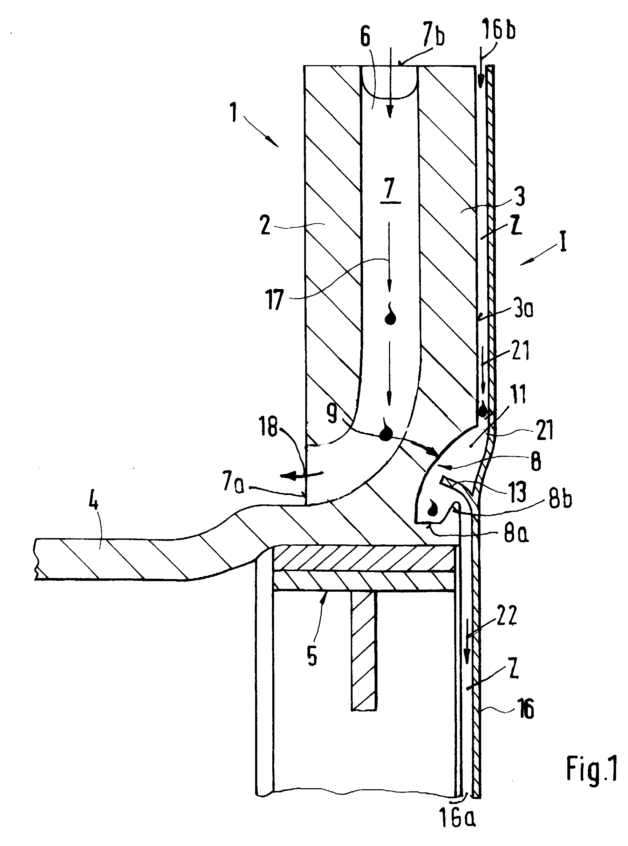

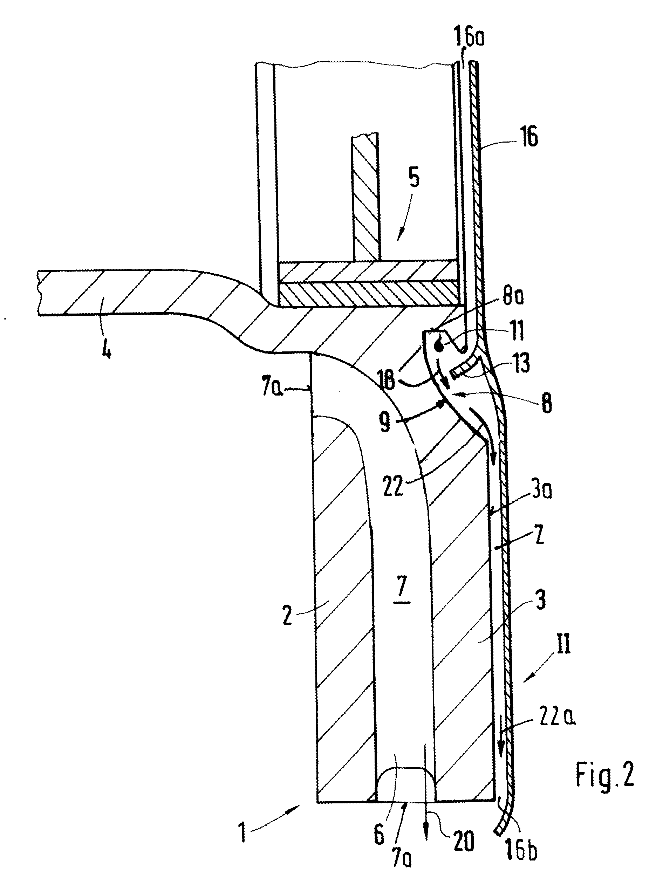

Das Wasserführungsblech 13 ist, wie die Figuren 1 und 2 näher zeigen, schräg unter einem Winkel angestellt und erstreckt sich bis nahe zum Grund 9 des Ringkanals 11. Die Luftführungskanäle 7 sind getrennt vom Ringkanal 11 angeordnet, das heißt die Aus- bzw. Eintrittsöffnungen wie die Mündungsöffnung 7a bzw. 7b und 7b bzw. 7a der Luftführungskanäle 7 sind getrennt von dem Mündungsspalten 16a und 16b vorgesehen.

In Figur 1 ist eine Wassereintrittsposition 1 dargestellt, das heißt der Wassereintritt erfolgt etwa in vertikaler Position der Bremsscheibe 1, wobei auch in weiteren Positionen Wasser bzw. Wassertropfen und dgl. in die Luftführungskanäle 7 gelangen können. Das Wasser fließt in Pfeilrichtung 17 durch die Luftführungskanäle 7 und von hier aus in Pfeilrichtung 18 bzw. 20 durch die Mündungsöffnungen 7a bzw. 7b nach außen. Die Luftführungkanäle 7 sind im Bereich der Mündungsöffnung 7a bogenförmig ausgeführt und verlaufen zur Mündungsöffnung 7b zwischen den Reibringen 2, 3 geradlinig und parallel zu diesen.

Im Bereich Z zwischen dem Abschirmblech 16 und dem inneren Reibring 3 eintretendes Wasser bzw. Wassertropfen fließen in Pfeilrichtung 21 in den Ringkanal 11 und in die Rinne 8a und dann in Pfeilrichtungen 22, 22a direkt nach außen.

Durch das abgestellte Wasserführungsblech 13 wird somit eine labyrinthartige Abschirmung zur Innenbackenbremse 5 und darüber hinaus eine getrennt vom Luftführungskanal 7 erfolgende Wasserführung nach außen erzielt. Der Ringkanal 11 kann einen Querschnitt aufweisen, der beispielsweise dreieckförmig, u-förmig und halbkreisförmig ausgerundet ausgebildet sein kann, damit das eintretende Wasser ohne Hindernis nach außen in kürzester Zeit abgeleitet werden kann.

## Patentansprüche

1. Kombinierte Scheiben- und Trommelbremse mit einer innenbelüfteten Bremsscheibe, aus zwei Reibringen bestehend und mit einem von einem Abschirmblech abgestellten, umlaufenden Wasserführungsblech und einer in einer Bremstrommel angeordneten Innenbackenbremse, wobei im inneren Reibring ein Ringkanal vorgesehen ist und eine dem Grund des Kanals gegenüberliegende verengte Nutöffnung vorgesehen ist, dadurch gekennzeichnet, daß die Lufführungskanäle (7) der Bremsscheibe (1) äußere Wasserabführungskanäle bilden, die zu einem vom Abschirmblech (16) bis zur Reibringfläche (3a) begrenzten inneren wasserabführenden Zwischenraum (Z) abgetrennt sind, und daß das abgestellte Wasserführungsblech (13) in den Ringkanal (11) ragt und unter einem Winkel zum Ringkanal (11) derart angestellt ist, daß in einer etwa vertikalen Wassereintrittsposition (I) das Führungblech (13) unter einem spitzen Winkel zum Kanalgrund (9) steht und gleichzeitig in einer etwa vertikalen Wasseraustrittsposition (II) das Führungsblech (13) eine Ablaufschräge bildet.

2. Kombinierte Scheiben- und Trommelbremse nach Anspruch 1, dadurch gekennzeichnet, daß die Wasserabführungskanäle in den Luftführungskanälen (7) einen inneren, bogenförmig ausgeführten Wasserauslauf besitzen, dessen Mündungsöffnung (7a) der Bremstrommel (4) zugerichtet und hierzu unter einen Winkel von 90 Grad angeordnet ist.

3. Kombinierte Scheiben- und Trommelbremse nach den Ansprüchen 1 oder 2, dadurch gekennzeichnet, daß der Ringkanal (11) einen bogenförmigen Grund (9) aufweist, der sich von der Reibringfläche (3a) bis zu einer Rinne (8a) erstreckt, die von einem äußeren Rand (8b) begrenzt ist.
